# EUROPÄISCHE PATENTSCHRIFT

(11) **EP 0 415 045 B1**
(45) Veröffentlichungstag und Bekanntmachung des Hinweises auf die Patenterteilung: **24.11.1993**
(21) Anmeldenummer: 90113357.9
(22) Anmeldetag: 12.07.1990
(51) Int. Cl.: F02M 25/08

(54) **Vorrichtung zum Entfernen von Brennstoff und Brennstoffdämpfen**
Device for removing fuel and fuel vapours
Dispositif pour éloigner le combustible et les vapeurs de combustible

(30) Priorität: 19.08.1989 DE 8909976 U
(43) Veröffentlichungstag der Anmeldung: 06.03.1991
(73) Patentinhaber: PIERBURG GMBH, 41460 Neuss (DE)
(72) Erfinder: Müller, Hans Jürgen, D-4650 Gelsenkirchen (DE)

(56) Entgegenhaltungen:
- DE-A- 3 623 894
- DE-A- 3 832 500
- US-A- 4 168 686
- US-A- 4 926 825

## Beschreibung

Die Neuerung betrifft eine Vorrichtung zum Entfernen von Brennstoff und Brennstoffdämpfen aus Brennkraftanlagen in Fahrzeugen nach dem Oberbegriff des Schutzanspruchs 1.

Aus dem Brennstofftank einer Brennkraftanlage entweichen Brennstoffdämpfe, wenn sich die Temperatur im Tank durch Wärmezufuhr über die Wandungen oder durch zurückgeführten, aufgeheizten Kraftstoff erhöht. Damit diese nicht in die Atmosphäre gelangen, werden sie durch einen mit Aktivkohle als Adsorptionsmittel gefüllten Behälter geleitet. Ebenso entweichen Brennstoffdämpfe aus dem Vergaser bzw. Luftansaugkanal einer Einspritzanlage, dem Luftfilter und damit verbundenen Teilen der Brennkraftanlage, wenn der Motor abgestellt wird, die Brennkraftmaschine mithin stillsteht und mit ihrer gespeicherten Wärme die erwähnten Anlagenteile aufheizt. Auch hier wird ein Austreten des Brennstoffdampfes in die Atmosphäre dadurch verhindert, daß er zum Beispiel durch eine Umschaltbelüftung einem gemeinsamen oder separaten Aktivkohlefilter zugeführt wird.

Das Adsorptionsmittel muß regelmäßig regeneriert werden, damit stets ausreichende Adsorptionskapazität zur Verfügung steht. Zur Regeneration reicht es aus, daß normale atmosphärische Luft über die Adsorptionsmittelschicht geleitet wird. Diese Regenerationsluft nimmt dabei durch Desorption insbesondere die zuvor an dem Adsorptionsmittel adsorbierten Kohlenwasserstoffe auf. Dabei entsteht ein Luft/Brennstoffgemisch, welches in der Brennkraftmaschine verwertet wird. Deshalb wird die Regeneration während der Betriebsphasen der Brennkraftmaschine durchgeführt, und zwar derart, daß ein Teil der von der Brennkraftmaschine angesaugten Verbrennungsluft über die Adsorptionsmittelschicht geleitet und nachfolgend der Brennkraftmaschine zugeführt wird. Je größer der von der Brennkraftmaschine angesaugte Volumenstrom ist, um so schneller wird das Adsorptionsmittel regeneriert, also am besten im Vollastbereich der Brennkraftmaschine. Durch Autobahnfahrten zum Beispiel kann also eine beschleunigte Regeneration gewährleistet werden.

Auch wenn die Brennkraftmaschine über längere Perioden im unteren Teillastbereich betrieben wird, ist der Erhalt einer ausreichenden Adsorptionskapazität des Adsorptionsmittels gewünscht.

Im unteren Teillastbereich der Brennkraftmaschine ist das Regenerieren nach der vorbeschriebenen Vorgehensweise aber problematisch, weil die Regenerationsluft je nach Beladungszustand des Adsorptionsmittels mehr oder weniger stark mit Kohlenwasserstoffen angereichert wird. Im Extremfall kann es sich bei dem über die Adsorptionsmittelschicht angesaugten Volumenstrom um nahezu reinen Brennstoffdampf handeln. In dem entgegengesetzten Extremfall, wenn nämlich das Adsorptionsmittel völlig regeneriert wird, ist die der Brennkraftmaschine zur Verbrennung zugeführte Regenerationsluft völlig frei von Kohlenwasserstoffen. Im ersten Fall wird der Brennkraftmaschine also ein überfettes und im letzteren Fall ein abgemagertes Luft/Brennstoffgemisch zugeführt. Vor allem die Überfettung ist unerwünscht. Damit gleichwohl auch im unteren und mittleren Teillastbereich eine möglichst umfangreiche Regeneration möglich ist, hat man getaktete Ventile in die die Regenerationsluft der Brennkraftmaschine zuführende Bypaßleitung eingesetzt, z. B. in dem System der DE-A 36 23 894. Dieses System geht aus von einer Vorrichtung, bei der ein Verdunstungsgasdurchlaß in den Ansaugkanal mündende Öffnungen hat, die derart angeordnet sind: 'daß eine stromauf einer Drosselklappe gelegene Öffnung geöffnet ist, wenn die Drosselklappe voll geschlossen ist, während die stromab der Drosselklappe gelegene andere Öffnung geöffnet ist, wenn die Drosselklappe zu einem Winkel geöffnet ist, der gleich oder größer als ein verhältnismäßig kleiner vorbestimmter Winkel ist.

Daher wird das Verdunstungsgas bei voll geschlossener Drosselklappe nicht in den Ansaugkanal geleitet, da die stromauf gelegene Öffnung mit der Umgebungsluft in Verbindung steht, während es bei der Öffnung der Drosselklappe um einen Winkel, der gleich oder größer als der genannte vorgeschriebene Winkel ist, in den Ansaugkanal geleitet wird, da an der stromab gelegenen Öffnung der Unterdruck im Ansaugrohr herrscht'.

Es ist jedoch zu beachten, daß bei leerlaufnahem Betrieb der Brennkraftmaschine eine erhebliche Druckdifferenz zwischen Luftansaugkanal und Atmosphäre besteht, die am Ventil anliegt, so daß die Schließphasen des getakteten Ventils extrem lang sind, so daß ein optimales Verhältnis zwischen den Luftströmen nicht mehr geregelt bzw. gesteuert werden kann und es nicht mehr gelingt, das der Brennkraftmaschine insgesamt zugeführte Luft/Brennstoffverhältnis in den gewünschten Grenzen zu halten.

Die von der DE-A-36 23 894 zitierte Vorrichtung (Spalte 3, Zeile 56-Spalte 4, Zeile 16) entspricht dem Oberbegriff von Anspruch 1.

Davon ausgehend liegt der Erfindung die Aufgabe zugrunde, eine Vorrichtung der eingangs genannten Art zu schaffen, durch die bei allen Lastzuständen der Brennkraftmaschine die maximal mögliche Regenerationsleistung an der Adsorptionsmittelschicht gewährleistet ist, ohne daß der Brennkraftmaschine ein zu stark überfettetes Gemisch zugeführt wird. Nach Möglichkeit sollen auch besonders starke Abmagerungen vermieden werden.

Zur Lösung dieser Aufgabe sind die kennzeichnenden Merkmale von Anspruch 1 vorgesehen.

Diese Maßnahmen bewirken die Bildung eines Mischdruckes aus stromab und stromauf der Drosselklappe herrschenden Drücken bereits bei in Leerlaufstellung befindlicher Drosselklappe in dem Leitungsabschnitt, der zu dem Ventil führt, so daß die am Ventil anstehende Druckdifferenz verringert wird.

Bei zunehmender Öffnung der Drosselklappe verringert sich der stromauf bestehende Abschnitt, bis er nach stromab übergewechselt ist, wobei der Einfluß des stromauf der Drosselklappe herrschenden Druckes dabei zurückgenommen wird.

Die Ausbildung des Einmündequerschnitts erfolgt in Abstimmung auf einen gewünschten Ventildurchsatz. Der Einmündequerschnitt kann dabei als Schlitz ausgebildet sein oder aus mindestens zwei Bohrungen bestehen, die stromauf und stromab der geschlossenen Drosselklappe in den Luftansaugkanal einmünden.

Das elektrisch steuerbare Ventil ist dabei vorteilhafterweise als elektromagnetisches Taktventil ausgebildet, das auf Signale eines Steuergerätes mit mehreren Motorbetriebsparametereingängen reagiert.

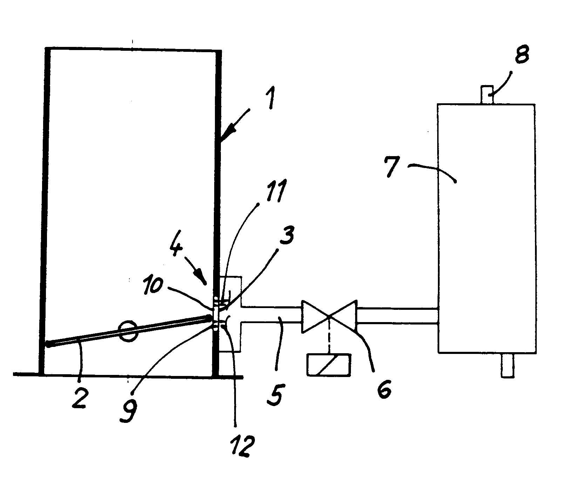

Ein Ausführungsbeispiel der Erfindung ist in der Zeichnung dargestellt und wird nachfolgend beschrieben.

Die Zeichnung zeigt in schematischer Darstellung einen Luftansaugkanalabschnitt 1 einer Brennkraftmaschine mit Drosselklappe 2 und als Schlitz 3 ausgebildeten Einmündequerschnitt 4 einer Leitung 5, die über ein elektromagnetisches Taktventil 6 mit einem Adsorptionsmittelbehälter 7 verbunden ist. Der Adsorptionsmittelbehälter ist in bekannter, nicht dargestellten Weise mit Teilen der Brennkraftanlage und eines Brennstofftanks verbunden und weist einen Atmosphärenanschluß 8 auf. Bei geschlossener Drosselklappe 2 weist der Schlitz 3 stromauf und stromab der Drosselklappe 2 liegende Abschnitte 9, 10 auf, wobei der stromaufliegende Abschnitt 10 bei Öffnung der Drosselklappe 2 nach stromab überwechselt. Bei Motorbetrieb wird über die Leitung 5 das Taktventil 6, den Adsorptionsmittelbehälter 7 und Atmosphärenanschluß 8 Luft in den Luftansaugkanal 1 gesaugt und je nach Beladezustand des Adsorptionsmittels mit Brennstoffdampf beladen.

Der während des Betriebs im Brennstofftank entstehende Brennstoffdampf wird ohne Adsorption direkt von der Luft mitgeführt. In Stillstandsphasen der Brennkraftmaschine ist das Ventil 6 geschlossen und Brennstoffdampf aus Teilen der Brennkraftanlage und des Tanks wird an dem Adsorptionsmittel absorbiert.

Bei leerlaufnahem Betrieb der Brennkraftmaschine stellt sich in dem zum Ventil führenden Leitungsabschnitt ein Mischdruck aus stromab und stromauf der Drosselklappe herrschenden Drücken ein, so daß die am Ventil anstehende Druckdifferenz verringert wird. Hierdurch ist das Taktventil mit kürzeren Schließphasen betreibbar, wodurch es in Verbindung mit einem Steuergerät mit mehreren Betriebsparametereingängen möglich wird, zum Beispiel in Abhängigkeit von Betriebszuständen der Brennkraftmaschine oder dem Lambda-Signal bei lambdageregelten Konzepten, den Proportionalitätsfaktor zwischen dem insgesamt von der Brennkraftmaschine angesaugten Ansaugluftstrom und dem Regenerationsluftstrom einzustellen.

Der Einmündequerschnitt kann wahlweise auch aus mindestens zwei Bohrungen 11, 12 (gestrichelt eingezeichnet) bestehen.

Die Neuerung ermöglicht ein gutes Regelverhalten, die Verwendung relativ kleiner und daher leichter Adsorptionsmittelbehälter und Ventilbauteile und gewährleistet, daß sowohl ein Überfetten als auch ein Abmagern der der Brennkraftmaschine insgesamt zugeführten Reaktionskomponenten trotz der durchgeführten Ad- und Desorption von Kohlenwasserstoffdämpfen so gut wie völlig verhindert ist, ohne daß hierzu ein besonders hoher Aufwand zu treiben ist.

## Patentansprüche

1. Vorrichtung zum Entfernen von Brennstoff und Brennstoffdämpfen aus Brennkraftanlagen in Fahrzeugen mittels Adsorption an ein Adsorptionsmittel und zum Regenerieren des Adsorptionsmittels mittels eines von der Brennkraftmaschine angesaugten, über das Adsorptionsmittel geleiteten und als Teilmenge der von der Brennkraftmaschine insgesamt angesaugten Verbrennungsluft verwendeten Luftstromes, wobei der Luftstrom über eine Leitung (5) in einen Luftansaugkanal (1) einmündet und der Einmündequerschnitt (4) bei in Leerlaufstellung befindlicher Drosselklappe (2) stromab und stromauf der Drosselklappe (2) liegende Abschnitte (9, 10) aufweist, dadurch gekennzeichnet, daß in der Leitung (5) ein elektrisch steuerbares Ventil (6) angeordnet ist, daß der Einmündequerschnitt im Schwenkbereich der Drosselklappe einmündet und daß der stromaufliegende Abschnitt (10) bei Öffnung der Drosselklappe (2) nach stromab überwechselt.

2. Vorrichtung nach Schutzanspruch 1, **dadurch gekenn****zeichnet**, daß der Einmündequerschnitt als Schlitz (4) ausgebildet ist oder aus mindestens zwei Bohrungen (11, 12) besteht.

3. Vorrichtung nach Schutzanspruch 1 oder 2, **dadurch** **gekennzeichnet**, daß das elektrisch ansteuerbare Ventil als Taktventil (6) auf Signale eines Steuergerätes mit mehreren Motorbetriebsarametereingängen reagiert.

## Claims

1. Device for removing fuel and fuel vapours from internal combustion installations in vehicles by means of adsorption on an adsorbent and for regenerating the adsorbent by means of an airstream aspired by the internal combustion engine, passed over the adsorbent and used as a part quantity of the total combustion air aspired by the internal combustion engine, the air stream entering an air intake port (1) via a line (5) and the entry cross-section (4) having, when the throttle (2) is in the idling position, sections (9, 10) downstream and upstream of the throttle (2), characterised in that an electrically controllable valve (6) is arranged in the line (5), that the entry cross-section ends within the pivoting range of the throttle and that the section located upstream (10) changes to downstream when the throttle (2) is opened.

2. Device according to Claim 1, characterised in that the entry cross-section is formed as a slot (4) or consists of at least two bores (11, 12).

3. Device according to Claim 1 or 2, characterised in that the electrically controllable valve reacts as a timer valve (6) to signals from a control instrument having a plurality of engine parameter inputs.

## Revendications

1. Dispositif pour éliminer le combustible et les vapeurs de combustible des installations à combustion interne dans des véhicules au moyen de l'adsorption sur un adsorbant et pour régénérer l'adsorbant au moyen d'un courant d'air aspiré par le moteur à combustion interne, dirigé sur l'adsorbant et utilisé comme quantité partielle de l'air de combustion globalement aspiré par le moteur à combustion interne, le courant d'air débouchant par l'intermédiaire d'une conduite (5) dans un tube d'aspiration d'air (1) et la section de débouchure (4) présentant, lorsque le clapet d'étranglement (2) se trouve dans la position de marche à vide, des sections (9, 10) situées en aval et en amont du clapet d'étranglement (2), **caractérisé en ce** que dans la conduite (5) est insérée une soupape (6) pouvant être commandée électriquement, que la section de débouchure débouche dans la plage de pivotement du clapet d'étranglement, et que la section (10) située en amont passe en aval lors de l'ouverture du clapet d'étranglement (2).

2. Dispositif selon la revendication 1, caractérisé en ce que la section de débouchure est conformée en fente (4) ou réalisée sous la forme d'au moins deux alésages (11, 12).

3. Dispositif selon l'une des revendications 1 ou 2, caractérisé en ce que la soupape pouvant être commandée électriquement est conformée en soupape de synchronisation (6) et réagit à des signaux d'un appareil de commande avec plusieurs entrées de paramétres de fonctionnement du moteur.
